# FASCICULE DE BREVET EUROPEEN

(11) **EP 0 703 395 B1**
(45) Date de publication et mention de la délivrance du brevet: **24.03.1999**
(21) Numéro de dépôt: 95401940.2
(22) Date de dépôt: 24.08.1995
(51) Int. Cl.: F16L 5/02, F16B 37/08

(54) **Système d'immobilisation axial d'un organe allongé**
System zur axialen Festlegung eines langgestreckten Elements
System for axially mmobilising an elongated element

(30) Priorité: 26.08.1994 FR 9410335
(43) Date de publication de la demande: 27.03.1996
(73) Titulaire: ACCO LA TELEDYNAMIQUE, Société Anonyme, 91031 Evry Cédex (FR)
(72) Inventeur: Deligny, Jean, F-93800 Epinay sur Seine (FR)
(74) Mandataire: Derambure, Christian

(56) Documents cités:
- EP-A- 0 604 196
- FR-A- 437 028
- FR-A- 2 583 497
- US-A- 1 403 655
- US-A- 4 186 761
- US-A- 4 188 145
- US-A- 4 801 231

## Description

L'invention concerne un système d'immobilisation sur une paroi d'un organe allongé du type notamment d'un conduit.

Un tel dispositif trouve son application notamment dans le domaine des câbles de commande pour véhicule automobile.

On connaît des systèmes d'immobilisation destinés à assurer l'immobilisation mutuelle de deux organes. Cependant ces systèmes prévoient une immobilisation uniquement axiale et sont généralement d'une constitution relativement complexe.

Le document FR-A-2 229 272 décrit un élément d'arrêt axial destiné à assurer l'immobilisation mutuelle de deux organes. Il permet notamment d'absorber des efforts axiaux élevés sans présenter des difficultés de montage. Cependant il ne prévoit aucun blocage dans les autres directions et notamment radialement.

Le document US-A-4 186 761 concerne un système à relâchement rapide pour le montage d'un assemblage de plomberie.

Dans ce système, il est prévu de ménager un trou dans la paroi pour le passage d'un conduit, ce trou permettant à lui seul le blocage du conduit dans toutes les directions perpendiculairement à l'axe longitudinal.

Le montage et le démontage du système sont donc complexes et sa structure nécessite l'utilisation de pièces rapportées.

Enfin, le document FR-A-2 583 497 concerne un dispositif de maintien d'une canalisation à travers une paroi selon le préambule de la revendication 1.

Le maintien de la canalisation à travers la paroi est effectué par encastrement du corps dans une fente de la paroi et serrage de la canalisation. Cet encastrement et ce serrage sont indépendants l'un de l'autre, ce qui rend le montage du dispositif relativement compliqué.

L'invention vise à pallier les inconvénients évoqués.

A cet effet, l'invention a pour objet un système d'immobilisation, selon les revendications.

Elle propose un système d'immobilisation, sur une paroi s'étendant suivant un plan médian prédéterminé, d'un organe allongé avec son axe longitudinal sensiblement perpendiculaire au plan médian, d'une simplicité de montage, de démontage, et d'utilisation remarquables et de coût particulièrement faible.

Un tel système d'immobilisation permet une immobilisation aussi bien axiale que radiale.

Selon la partie caractérisante de la revendication 1, l'élément est monté de façon externe et mobile par rapport au tronçon entre deux positions :
- une position ouverte dans laquelle l'élément mobile est espacé de l'épaulement d'une distance supérieure à l'épaisseur de la paroi, et
- une position fermée dans laquelle une face de l'élément mobile est plaquée contre la deuxième face de la paroi, le système de rappel élastique étant destiné à exercer une force de rappel suivant l'axe longitudinal de manière à déplacer l'élément mobile entre la position ouverte et la position fermée.

Selon une autre caractéristique, sur chaque branche de la cavité en "U" est ménagée respectivement une joue en saillie à l'intérieur de la cavité, apte à bloquer dans les directions axiale et radiale définie par le plan médian et notamment dans le sens opposé à la base du "U" de la cavité, l'organe introduit dans la cavité, lorsque l'élément mobile est en position fermée, par l'intermédiaire de moyens de blocage et de centrage prévus sur au moins une des faces en regard de l'épaulement et de l'élément mobile.

Ainsi, un système d'immobilisation tel que décrit précédemment présente notamment les avantages suivants :
- par une intervention manuelle très simple, il permet le blocage de l'organe allongé sur la paroi non seulement dans la direction de l'axe longitudinal de l'organe, mais également radialement.
- le montage et le démontage du système s'effectue par un simple relâchement de, ou traction sur l'élément mobile.

Les autres caractéristiques et avantages de l'invention résulteront de la description qui suit en référence aux dessins annexés dans lesquels :

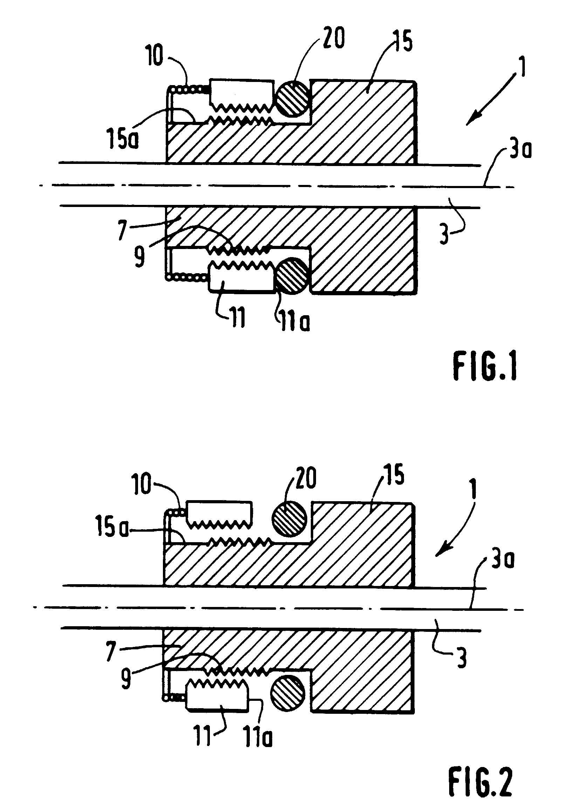

- la figure 1 est une vue schématique en coupe d'un système d'immobilisation selon l'invention dans une position fermée à vide ;
- la figure 2 est une vue schématique en coupe d'un système d'immobilisation selon l'invention dans une position ouverte à vide ;

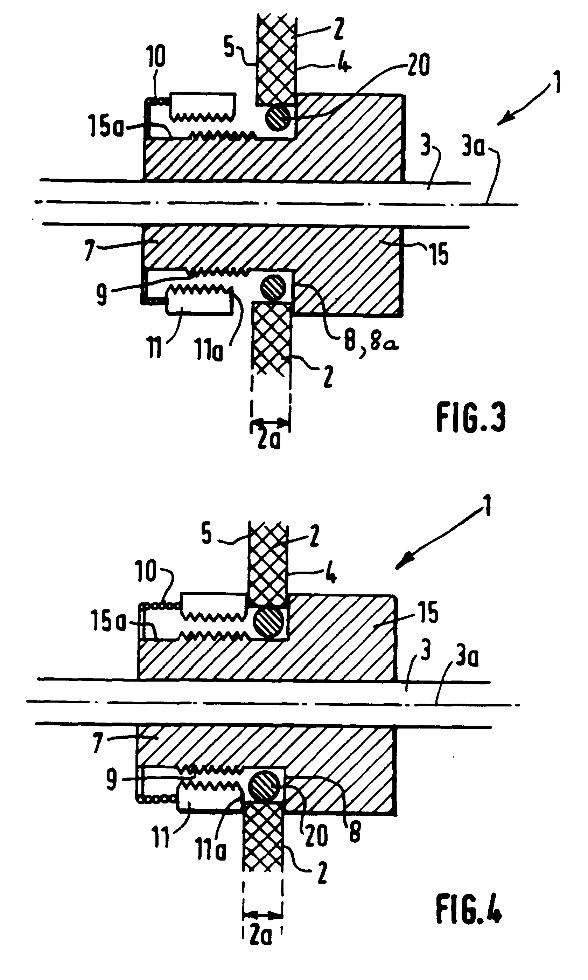

- la figure 3 est une vue schématique en coupe d'un système d'immobilisation selon l'invention dans une position ouverte, monté sur la paroi ;
- la figure 4 est une vue schématique en coupe d'un système d'immobilisation dans une position fermée, monté sur une paroi ;

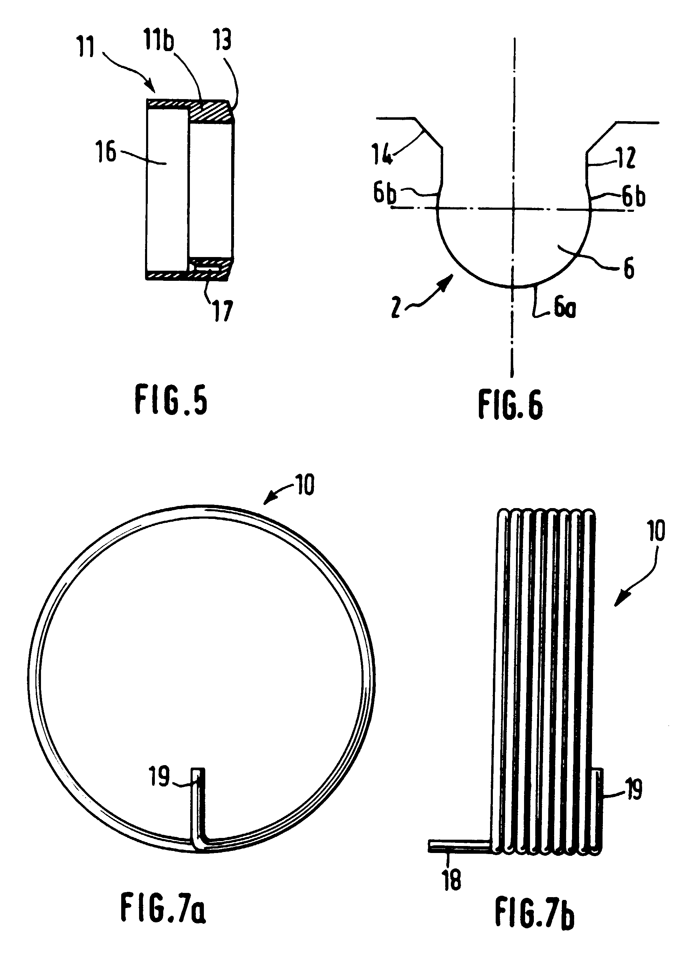

- la figure 5 est une vue en coupe d'un élément mobile du système selon l'invention ;
- la figure 6 est une vue en coupe d'une paroi sur laquelle doit être bloqué l'organe allongé par l'intermédiaire du système d'immobilisation selon l'invention ;
- la figure 7a est une vue de face d'un système de rappel élastique,
- la figure 7b est une vue de côté du système de rappel élastique représenté sur la figure 7a ; et

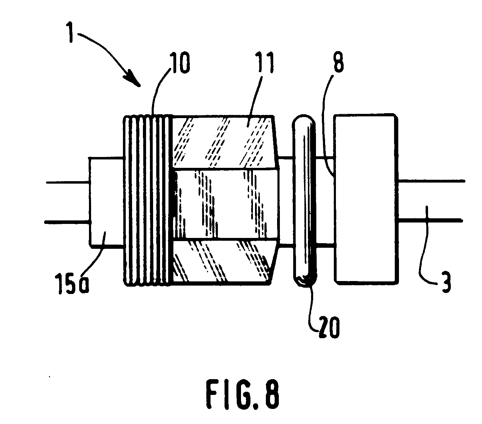

- la figure 8 est une vue de dessus du système d'immobilisation selon l'invention, en position ouverte.

L'invention concerne un système d'immobilisation 1, sur une paroi 2 s'étendant suivant un plan médian prédéterminé, d'un organe allongé 3 avec son axe longitudinal 3a sensiblement perpendiculaire au plan médian.

Dans toute la suite de la description, on entend par axe ou direction longitudinal, la direction correspondant à la direction générale de l'organe allongé. On entend par direction radiale, une direction sensiblement perpendiculaire à la direction longitudinale et correspondant ainsi au plan médian défini par la paroi.

Selon l'invention, la paroi 2 du système d'immobilisation 1 comporte une première 4 et une deuxième 5 faces opposées l'une à l'autre par rapport au plan médian et une cavité 6 en forme de "U" débouchant du côté opposé à la base du "U".

Selon l'invention, l'organe allongé 3 comporte :
- un tronçon 7 qui s'étend dans la direction longitudinale suivant l'axe longitudinal de l'organe 3 et qui est apte à être introduit radialement dans la cavité 6 en "U",
- un épaulement 8 radialement en saillie du tronçon 7 et pouvant venir en appui contre la première face 4 de la paroi 2,
- des moyens de guidage 9 suivant la direction longitudinale, et
- un système de rappel élastique 10 entre l'organe 3 et un élément monté mobile 11 sur l'organe 3 entre deux positions :
   - une position ouverte dans laquelle l'élément mobile 11 est espacé de l'épaulement 8 d'une distance supérieure à l'épaisseur 2a de la paroi 2, et
   - une position fermée dans laquelle une face lla de l'élément mobile est plaquée contre la deuxième face 5 de la paroi 2.

Le système de rappel élastique 10 est destiné à exercer une force de rappel dans la direction longitudinale suivant l'axe longitudinal de manière à déplacer l'élément mobile 11 de la position ouverte à la position fermée.

Afin d'effectuer un blocage dans la direction radiale, et bien sûr suivant la direction axiale aussi, sur chaque branche 6a du "U" de la cavité en "U" est ménagée une joue 12 en saillie vers l'intérieur de la cavité 6. Cette joue est apte à bloquer notamment dans la direction axiale et dans le sens opposé à la base 6a du "U", l'organe introduit dans la cavité, lorsque l'élément mobile 11 est en position fermée, et en coopérant avec les moyens de blocage et de centrage 13 prévus sur au moins une des faces en regard de l'épaulement 8 et de l'élément mobile 11.

Dans une variante de réalisation, les moyens de blocage et de centrage sont prévus à la fois sur la face 8a de l'épaulement 8 et sur la face lla de l'élément mobile 11 qui sont en regard l'une de l'autre par rapport au plan médian.

Pour faciliter l'introduction de l'organe allongé 3, chaque branche 6b du "U" de la cavité 6 présente, à son extrémité opposée à la base 6a du "U", une section inclinée 14 vers l'extérieur de la cavité 6 par rapport à l'axe défini par la branche 6b.

Suivant une forme de réalisation, le tronçon 7 et l'épaulement 8 sont d'un seul tenant et forment un manchon de positionnement 15.

Les moyens de guidage 9 peuvent alors être ménagés sur une partie 15a du manchon de positionnement 15, opposée, suivant l'axe longitudinal 3a, à l'épaulement 8 par rapport au plan médian.

Le système de rappel élastique 10 est un ressort fixé d'une part à l'organe allongé 3, notamment par l'intermédiaire du manchon 15, et d'autre part à l'élément mobile 11.

Pour obtenir un usinage simple, le manchon 15 peut présenter une section transversale extérieure circulaire.

Dans ce cas, le ressort 10 est de forme hélicoïdale en étant monté de façon à être enroulé autour du manchon 15.

Pour permettre un blocage plus ferme dans la direction longitudinale, les moyens de guidage 9 ont la forme d'un filetage ménagé sur la surface extérieure de la partie 15a du manchon 15, et l'élément mobile 11 est un écrou pouvant être vissé sur le filetage 9 suivant la direction longitudinale.

Compte tenu de la forme circulaire de la section transversale extérieure du manchon 15, pour assurer un bon blocage et un bon centrage dans la direction axiale, mais aussi, à l'aide des joues 12, suivant la direction radiale, les moyens de blocage et de centrage 13 sont sous la forme d'une surface tronconique dont la section de petit diamètre est apte à faire saillie suivant l'axe longitudinal dans la cavité 6 tandis qu'une section de diamètre plus grand de cette surface est plaquée, lorsque l'écrou 11 est en position fermée, contre la première face 4 de la paroi 2 si la surface tronconique est ménagée sur l'épaulement 8 et contre la deuxième face 5 de la paroi 2 si la surface tronconique est ménagée sur l'écrou 11.

On peut également prévoir une surface tronconique à la fois sur l'écrou et sur l'épaulement 8.

De telles surfaces tronconiques d'appui entre le manchon et la tôle permettent d'éliminer totalement les jeux axiaux et radiaux entre ces pièces. De plus, en pénétrant dans l'espace défini par la découpe 6 et les joues 12, un verrouillage positif à l'aide de ces surfaces tronconiques de l'organe sur la tôle peut être obtenu, en direction radiale.

Suivant un mode de réalisation, l'écrou 11 comporte une cavité de logement 16 destinée à recevoir le ressort 10, cette cavité 16 étant prolongée par un orifice 17 ménagé dans le corps 11b de l'écrou 11 et qui s'étend suivant la direction longitudinale. Cet orifice 17 est destiné à recevoir une extrémité 18 du ressort 10, l'autre extrémité 19 du ressort étant fixée sur le manchon 15.

Afin d'assurer un centrage parfait une fois que l'ensemble organe allongé-système d'immobilisation est fixé à la paroi, le système d'immobilisation 1 comporte un joint torique 20 placé sur l'organe allongé 3 entre l'épaulement 8 et la pièce mobile 11, sur le tronçon 7 destiné à être introduit dans la cavité 6 de la paroi.

Dans l'exemple de réalisation considéré, le joint torique 20 est en matière plastique telle que caoutchouc et entoure le manchon 15 au niveau de la partie de manchon 15a entre le filetage 9 et l'épaulement 8.

De plus, le joint torique 20 permet de rendre sensible l'introduction du tronçon 7 dans la découpe de la tôle, par son écrasement local au niveau des joues 12.

Ce système d'immobilisation 1 peut être utilisé pour différents types d'organe allongé 3 et notamment pour des conduits de forme tubulaire.

Le montage et le démontage du système d'immobilisation tel que décrit précédemment est ainsi très simple :

Pour le montage il suffit de dévisser l'écrou 11, ce qui permet ainsi de créer un espace entre l'épaulement 8 et la surface 11a de l'écrou 11, supérieur à l'épaisseur 2a de la paroi 2 et ainsi d'introduire l'ensemble dans la cavité 6. Pour effectuer le blocage, il suffit alors de lâcher l'écrou 11 qui va être plaqué, en position fermée contre la deuxième face 5 de la paroi 2 par l'intermédiaire de la force de rappel exercée par le ressort 10.

Pour le démontage, il suffit de dévisser à nouveau l'écrou 11 et d'extraire l'ensemble organe allongé-système d'immobilisation de la cavité 6.

## Revendications

1. Système d'immobilisation, sur une paroi (2) s'étendant suivant un plan médian prédéterminé, d'un organe allongé (3) avec son axe longitudinal (3a) sensiblement perpendiculaire au plan médian,
- la paroi (2) comportant une première (4) et une deuxième (5) faces opposées l'une à l'autre par rapport au plan médian et une cavité (6) en forme de "U" débouchant du côté opposé à la base (6a) du "U",
- le système comportant un élément (11) monté mobile sur l'organe allongé (3) ;
- l'organe allongé (3) comportant :
- un tronçon (7) qui s'étend suivant l'axe longitudinal (3a) de l'organe (3) et qui est apte à être introduit radialement dans la cavité (6) en "U",
- un épaulement (8) radialement en saillie du tronçon (7) et pouvant venir en appui contre la première face (4) de la paroi,
- des moyens de guidage (9), suivant l'axe longitudinal, de l'élément (11), et
- un système de rappel élastique (10) de l'élément (11),
caractérisé en ce que :
- l'élément (11) est monté de façon externe et mobile par rapport au tronçon (7) entre deux positions :
- une position ouverte dans laquelle l'élément mobile (11) est espacé de l'épaulement (8) d'une distance supérieure à l'épaisseur (2a) de la paroi (2), et
- une position fermée dans laquelle une face (11a) de l'élément mobile (11) est plaquée contre la deuxième face (5) de la paroi (2),
le système de rappel élastique (10) étant destiné à exercer une force de rappel suivant l'axe longitudinal (3a) de manière à déplacer l'élément mobile (11) de la position ouverte à la position fermée.

2. Système selon la revendication 1 caractérisé en ce que sur chaque branche (6b) de la cavité (6) en "U" est ménagée respectivement une joue (12) en saillie vers l'intérieur de la cavité (6), apte à bloquer dans les directions axiale et radiale définie par le plan médian, notamment dans le sens opposé à la base (6a) du "U" de la cavité (6), l'organe (3) introduit dans la cavité, lorsque l'élément mobile (11) est en position fermée, par l'intermédiaire de moyens de blocage et de centrage (13) prévus sur au moins une des faces en regard de l'épaulement (8) et de l'élément mobile (11).

3. Système selon la revendication 2, caractérisé en ce que les moyens de blocage et de centrage (13) sont prévus sur la face de l'épaulement (8) et la face de l'élément mobile (11) qui sont en regard l'une de l'autre par rapport au plan médian.

4. Système selon la revendication 2 ou 3, caractérisé en ce que chaque branche (6b) du "U" de la cavité (6) présente à son extrémité opposée à la base (6a) du "U" une section inclinée (14) vers l'extérieur de la cavité (6) par rapport à l'axe défini par la branche (6b).

5. Système selon l'une quelconque des revendications 1 à 4, caractérisé en ce que le tronçon (7) et l'épaulement (8) sont d'un seul tenant et forment un manchon de positionnement (15).

6. Système selon la revendication 5, caractérisé en ce que les moyens de guidage (9) sont ménagés sur une partie (15a) du manchon de positionnement opposée, suivant l'axe longitudinal (3a), à l'épaulement (8) par rapport au plan médian.

7. Système selon l'une quelconque des revendications 1 à 5, caractérisé en ce que le système de rappel élastique (10) est un ressort fixé d'une part à l'organe (3) et d'autre part à l'élément mobile.

8. Système selon l'une quelconque des revendications 5 à 7, caractérisé en ce que le manchon (15) présente une section transversale extérieure circulaire.

9. Système selon la revendication 8, caractérisé en ce que le ressort (10) est de forme hélicoïdale en étant monté de façon à être enroulé autour du manchon (15).

10. Système selon la revendication 9, caractérisé en ce que les moyens de guidage (9) sont sous la forme d'un filetage ménagé sur la surface extérieure de la partie (15a) du manchon (15), et en ce que l'élément mobile (11) est un écrou pouvant être vissé sur le filetage suivant l'axe longitudinal (3a).

11. Système selon la revendication 10, caractérisé en ce que les moyens de blocage et de centrage (13) sont sous la forme d'une surface tronconique dont la section de petit diamètre est apte à faire saillie suivant l'axe longitudinal (3a) dans la cavité (6) tandis qu'une section de diamètre plus grand de cette surface est plaquée contre la deuxième face (5) de la paroi lorsque l'écrou (11) est en position fermée.

12. Système selon la revendication 10 ou 11, caractérisé en ce que l'écrou (11) comporte une cavité de logement (16) destinée à recevoir le ressort (10), cette cavité (16) étant prolongée par un orifice (17) ménagé dans le corps (llb) de l'écrou (11), et destiné à recevoir une extrémité (18) du ressort, l'autre extrémité (19) du ressort étant fixé sur le manchon (15).

13. Système selon l'une quelconque des revendications 1 à 12, caractérisé en ce qu'il comporte un joint torique (20) en matière élastique et placé sur l'organe (3) entre l'épaulement (8) et la pièce mobile (11), sur le tronçon (7) destiné à être introduit dans la cavité (6) de la paroi (2).

14. Système selon l'une quelconque des revendications 1 à 13, caractérisé en ce que l'organe allongé (3) est un conduit.

## Patentansprüche

1. Immobilisierungssystem, an einer sich nach einer vorgegebenen Ebene erstreckenden Wand (2), eines länglichen Organs (3), dessen Längsachse (3a) etwa lotrecht zur mittleren Ebene verläuft, wobei
- die Wand (2) eine erste (4) und eine zweite (5) sich in Bezug auf die mittlere Ebene gegenüberliegende Seite umfasst, sowie eine « U-förmige » Vertiefung (6), die an der der Basis (6a) des « U » gegenüberliegenden Seite mündet,
- das System ein am länglichen Organ (3) mobil montiertes Element (11) umfasst ;
- das längliche Organ (3) umfasst :
. einen Abschnitt (7), der sich nach der Längsachse (3a) des Organs (3) erstreckt und geeignet ist, radial in die « U-förmige » Vertiefung (6) eingeführt zu werden,
. einen radial aus dem Abschnitt (7) herausragenden Absatz (8), der sich gegen die erste Seite (4) der Wand abstützen kann,
. Führungsmittel (9) des Elements (11) nach der Längsachse, und
. ein Federrückstellsystem (10) des Elements (11),
dadurch gekennzeichnet, dass
- das Element (11) zwischen zwei Positionen ausserhalb und mobil in Bezug auf den Abschnitt (7) montiert ist :
. einer geöffneten Position, in der das mobile Element (11) in einem Abstand zum Absatz (8) angeordnet ist, der grösser ist als die Dicke (2a) der Wand (2),
. einer geschlossenen Position, in der eine Seite (11a) des mobilen Elements (11) gegen die zweite Seite (5) der Wand (2) gedrückt ist,
wobei das Federrückstellsystem (10) dazu bestimmt ist, eine Rückstellkraft nach der Längsachse (3a) auszuüben, um das mobile Element (11) aus der geöffneten Position in die geschlossene Position zu versetzen.

2. System nach Anspruch 1, dadurch gekennzeichnet, dass an jedem Schenkel (6b) der « U-förmigen » Vertiefung (6) jeweils eine Backe (12) vorgesehen ist, die in die Vertiefung (6) hineinragt und geeignet ist, das in die Vertiefung eingeführte Organ (3) in axialer und radialer, von der mittleren Ebene definierter Richtung zu blockieren, insbesondere in der der Basis (6a) des « U » der Vertiefung (6) gegenüberliegenden Richtung, wenn sich das mobile Element (11) in geschlossener Position befindet, und zwar anhand von Blockier- und Zentriermitteln (13), die an zumindest einer der dem Absatz (8) und dem mobilen Element (11) gegenüberliegenden Seiten vorgesehen sind.

3. System nach Anspruch 2, dadurch gekennzeichnet, dass die Blockier- und Zentriermittel (13) an der Seite des Absatzes (8) und an der Seite des mobilen Elements (11) vorgesehen sind, die sich in Bezug auf die mittlere Ebene gegenüberliegen.

4. System nach Anspruch 2 oder 3, dadurch gekennzeichnet, dass jeder Schenkel (6b) des « U » der Vertiefung (6) an seinem der Basis (6a) des « U » gegenüberliegenden Ende eine in Bezug auf die vom Schenkel (6b) definierte Achse nach aussen der Vertiefung (6) geneigte Sektion (14) aufweist

5. System nach einem der Ansprüche 1 bis 4, dadurch gekennzeichnet, dass der Abschnitt (7) und der Absatz (8) ein einziges Stück und damit eine Positioniermuffe (15) bilden.

6. System nach Anspruch 5, dadurch gekennzeichnet, dass die Führungsmittel (9) an einem Teil (15a) der Positioniermuffe vorgesehen sind, der nach der Längsachse (3a) dem Absatz (8) in Bezug auf die mittlere Ebene gegenüberliegt.

7. System nach einem der Ansprüche 1 bis 5, dadurch gekennzeichnet, dass das Federrückstellsystem (10) aus einer Feder besteht, die einerseits am Organ (3) und andererseits am mobilen Element befestigt ist.

8. System nach einem der Ansprüche 5 bis 7, dadurch gekennzeichnet, dass die Muffe (15) einen kreisförmigen externen Querschnitt aufweist.

9. System nach Anspruch 8, dadurch gekennzeichnet, dass die Feder (10) schraubenförmig und so montiert ist, dass sie um die Muffe (15) herum gerollt ist.

10. System nach dem Anspruch 9, dadurch gekennzeichnet, dass die Führungsmittel (9) die Form eines Gewindes aufweisen, das an der Aussenfläche des Teils (15a) der Muffe (15) vorgesehen ist, und dass das mobile Element (11) eine Mutter ist, die nach der Längsachse (3a) auf das Gewinde geschraubt werden kann.

11. System nach Anspruch 10, dadurch gekennzeichnet, dass die Blockier- und Zentriermittel (13) eine kegelstumpfartige Oberfläche aufweisen, deren Sektion mit kleinem Durchmesser nach der Längsachse (3a) aus der Vertiefung (6) herausragen kann, während eine Sektion mit grösserem Durchmesser dieser Oberfläche gegen die zweite Seite (5) des Wand gedrückt ist, wenn sich die Mutter (11) in geschlossener Position befindet.

12. System nach Anspruch 10 oder 11, dadurch gekennzeichnet, dass die Mutter (11) eine Aufnahmevertiefung (16) zur Aufnahme der Feder (10) aufweist, wobei diese Vertiefung (16) von einer im Körper (llb) der Mutter (11) vorgesehenen Öffnung (17) verlängert wird, um ein Ende (18) der Feder aufzunehen, während das andere Ende (19) der Feder an der Muffe (15) befestigt ist.

13. System nach einem der Ansprüche 1 bis 12, dadurch gekennzeichnet, dass es einen O-Ring (20) aus elastischem Material umfasst, der zwischen dem Absatz (8) und dem mobilen Teil (11) auf das Organ (3) gesetzt wird, auf dem Abschnitt (7), der in die Vertiefung (6) der Wand (2) eingeführt wird.

14. System nach einem der Ansprüche 1 bis 13, dadurch gekennzeichnet, dass das längliche Organ (3) eine Leitung ist.

## Claims

1. A system for immobilising, on a wall (2) extending along a predetermined mid-plane, an elongate member (3) it its longitudinal axis (3a) substantially perpendicular to the mid-plane,
- the wall (2) having first (4) and second (5) faces opposite each other with respect to the mid-plane and a U-shaped cavity (6) opening out on the side opposite to the base (6a) of the U,
- the system including an element (11) movably mounted on the elongate member (3);
- the elongate member (3) having:
- a portion (7) which extends along the longitudinal axis (3a) of the member (3) and which is able to be inserted radially into the U-shaped cavity (6),
- a shoulder (8) radially projecting from the portion (7) able to come into abutment against the first face (4) of the wall,
- means (9) for guiding the element (11) along the longitudinal axis, and
- an elastic return system (10) for the element (11),
characterised in that:
- the element (11) is mounted externally and movable with respect to the portion (7) between two positions:
- an open position in which the movable element (11) is spaced apart from the shoulder (8) by a distance greater than the thickness (2a) of the wall (2), and
- a closed position in which a face (11a) of the movable element (11) is pressed against the second face (5) of the wall (2),
the elastic return system (10) being intended to exert a return force along the longitudinal axis (3a) so as to mote the movable element (11) from the open position to the closed position.

2. A system according to Claim 1, characterised in that, on each arm (6b) of the U-shaped cavity (6) there is formed respectively a cheek (12) projecting towards the inside of the cavity (6), able to lock, in the axial and radial direction as defined by the mid-plane, notably in the direction opposite to the base (6a) of the U of the cavity (6), the member (3) introduced into the cavity, when the movable element (11) is in the closed position, by means of locking and centring means (13) provided on at least one of the faces opposite the shoulder (8) and the movable element (11) .

3. A system according to Claim 2, characterised in that the locking and centring means (13) are provided on the face of the shoulder (8) and the face of the movable element (11) which are opposite each other with respect to the mid-plane.

4. A system according to Claim 2 or 3, characterised in that each leg (6b) of the U of the cavity (6) has, at its end opposite to the base (6a) of the U, a section (14) inclined towards the outside of the cavity (6) with respect to the axis defined by the leg (6b).

5. A system according to any one of Claims 1 to 4, characterised in that the portion (7) and the shoulder (8) are made in a single piece and form a positioning sleeve (15).

6. A system according to Claim 5, characterised in that the guidance means (9) are provided on a part (15a) of the positioning sleeve opposite, along the longitudinal axis (3a), to the shoulder (8) with respect to the mid-plane.

7. A system according to any one of Claims 1 to 5, characterised in that the elastic return system (10) is a spring fixed on the one hand to the member (3) and on the other hand to the movable element.

8. A system according to any one of Claims 5 to 7, characterised in that the sleeve (15) has a circular external transverse section.

9. A system according to Claim 8, characterised in that the spring (10) is helical in shape whilst being mounted so as to be coiled around the sleeve (15).

10. A system according to Claim 9, characterised in that the guidance means (9) are in the form of a thread provided on the external surface of the part (15a) of the sleeve (15), and in that the movable element (11) is a nut which can be screwed onto the thread along the longitudinal axis (3a).

11. A system according to Claim 10, characterised in that the locking and centring means (13) are in the form of a tapered surface whose section with the smallest diameter is able to project along the longitudinal axis (3a) of the cavity (6) whilst a section of this surface with a larger diameter is pressed against the second face (5) of the wall when the nut (11) is in the closed position.

12. A system according to Claim 10 or 11, characterised in that the nut (11) has a housing cavity (16) intended to receive the spring (10), this cavity (16) being extended by an orifice (17) provided in the body (llb) of the nut (11), and intended to receive one end (18) of the spring, the other end (19) of the spring being fixed to the sleeve (15).

13. A system according to any one of Claims 1 to 12, characterised in that it includes an O-ring seal (20) made of elastic material and placed on the member (3) between the shoulder (8) and the movable piece (11), on the portion (7) intended to be introduced into the cavity (6) in the wall (2).

14. A system according to any one of Claims 1 to 13, characterised in that the elongate member (3) is a conduit.
